# EUROPÄISCHE PATENTANMELDUNG

(11) **EP 2 730 548 A1**
(43) Veröffentlichungstag der Anmeldung: **14.05.2014**
(21) Anmeldenummer: 12192334.6
(22) Anmeldetag: 13.11.2012
(51) Int. Cl.: C02F 1/44, B01D 61/16, B01D 65/08, C02F 1/52, C02F 101/32

(54) **Reinigung von mit Öl verschmutztem Wasser, Erzeugung von Prozesswasser, Erdölförderung und/oder -raffinerierung**

(71) Anmelder: CWT Clear Water Technologies GmbH, 97506 Grafenrheinfeld (DE)
(72) Erfinder: Bäuerle, Ulrich, 72124 Pliezhausen (DE)
(74) Vertreter: Götz, Georg Alois

(57) **Zusammenfassung**

Bei einem Verfahren zur Reinigung eines Öl (8) - Wasser (42) - Gemisches (40) wird im wesentlichen das Gemisch (40) einem Behälter (48) mit Ultrafiltrationseinheit (52) mit Membran (30) zugeführt, wird dem Gemisch (40) ein Schutzmaterial (50) zugegeben, das direkt oder nach chemischer Reaktion mit dem Wasser aus dem Gemisch (40), als Film (62) auf der Membran (30) freies Öl (8) von dieser fernhält.

Gereinigtes Prozesswasser für die Förderung und/oder Raffinerierung von Erdöl (8) wird so aus mit Erdöl (8) verschmutztem Prozesswasser (42) erzeugt.

Bei der Förderung und/oder Raffinerierung von Erdöl (8) wird das gereinigte Prozesswasser (42) als Speisewasser und/oder als Entsalzungswasser oder zur Reinjektion in ein Ölfeld (5) verwendet.

Eine Reinigungsvorrichtung (64) umfasst im Wesentlichen einen Behälter (48) mit Ultrafiltrationseinheit (52) mit Membran (30), eine Zuführungsleitung (28) zum Behälter (48) und eine Zugabevorrichtung (27) für Schutzmaterial (50) im Strömungsweg (56) zur Membran (30).

## Beschreibung

Die Erfindung bezieht sich auf ein Verfahren und eine Vorrichtung zur Reinigung eines Gemisches von mit Öl verschmutztem Wasser, sowie auf ein Verfahren zur Erzeugung von gereinigtem Prozesswasser bei der Förderung und/oder Raffinerierung von Erdöl.

Bei der Förderung von Erdöl wird grundsätzlich ein Erdöl-/Wassergemisch aus der Erde gefördert. Bei neu erschlossenen Ölfeldern besteht dieses Gemisch aus dem bereits in der erdölführenden Schicht enthaltenen Formationswasser sowie dem Öl, das gefördert werden soll. Bei älteren Ölfeldern muss zur Förderung des Erdöl-/Wassergemischs durch Injektionsbrunnen, die in einer gewissen Entfernung zum Förderbrunnen angelegt werden, Wasser in die Erdölformation gepresst werden. Durch den so aufgebauten Druck fließt das Wasser in der erdölführenden Schicht zum Förderbrunnen und trägt dabei Erdöl mit sich, das dann zusammen mit dem Injektionswasser und eventuell vorhandenem Formationswasser an dem Förderbrunnen entnommen werden kann.

Dieses Erdöl-/Wassergemisch muss nun getrennt werden, um für die Weiterverarbeitung geeignetes Rohöl zu erhalten. Der Wassergehalt des Erdöl-/Wassergemischs ist dabei von Ölfeld zu Ölfeld unterschiedlich und ändert sich auch mit der fortschreitenden Ausbeutung des Ölfelds.

Bei der Raffinerierung von Erdöl müssen z.B. salzhaltige Ölprodukte entsalzen werden. Hierzu wird das Ölprodukt mit Wasser gewaschen. Als Abfallprodukt entsteht mit Öl verschmutztes Wasser.

Öl-Wasser-Gemische sind in hohem Maße umweltschädlich und können daher nicht unbehandelt in die Umwelt entlassen werden. Sie müssen z.B. aufwendig entsorgt werden. Grundsätzlich ist es daher wünschenswert, Öl-Wasser-Gemische aufzubereiten, indem das Öl möglichst vom Wasser getrennt wird, um so Klarwasser zu erhalten, das dann z.B. weiterverwendet werden kann.

Zur Trennung des Öl-/Wassergemischs werden in der Regel Phasentrenner eingesetzt, d.h. das Öl-/Wassergemisch wird in einen Tank überführt, in dem sich das leichtere Öl und das schwerere Wasser unter Einfluss der Gravitation entmischen kann, so dass sich eine Ölphase an der Oberfläche und eine Wasserphase (z.B. im Fall der Erdölförderung Lagerstättenwasser) im unteren Tankbereich bildet,

Nach einer derartigen Trennung durch Gravitation verbleiben aber noch zwischen 500 und 1000 mg Öl pro Liter Wasser. Dies bedeutet zum Einen eine erhebliche Verschwendung kostbaren Öls, und zum Anderen kann das Wasser aufgrund der erheblichen Verschmutzung mit Öl nicht in die Umwelt abgegeben werden, sondern muss weiter aufbereitet und gereinigt werden.

Derzeit verfügbare Aufbereitungsverfahren und Aufbereitungsvorrichtungen weisen aber erhebliche Nachteile hinsichtlich der Kosten und der Aufbereitungsleistung auf. Bei den in den Vereinigten arabischen Emiraten üblichen Drei-Phasen-Trennern verbleibt ein Restölgehalt von 500 ppm Öl im Abwasser. Mit einer derartig hohen Belastung ist die Entsorgung des Wassers äußerst problematisch. Teilweise wird das Wasser als Abwasser in spezielle Abwasserteiche geleitet, die eine erhebliche Umweltverschmutzung bedeuten. Alternativ wird das Abwasser teilweise unter hohem Druck in poröse Aquifer gepresst. Damit ist zwar das Wasser zunächst beseitigt, allerdings werden durch diese Praxis Grundwasservorräte für eine zukünftige Trinkwassergewinnung zerstört.

In deutschen Ölfeldern wird über Koaleszenzabscheider eine Reduktion des Restölgehalts auf ca. 60 ppm erreicht. Auch diese Belastung ist aber noch zu hoch für eine direkte Abführung des Wassers, so dass auch hier das Wasser nur an eine Kläranlage abgegeben werden kann, wodurch erhebliche Zusatzkosten entstehen.

Eine auf den ersten Blick naheliegende Lösung bei der Erdölförderung, das belastete Lagerstättenwasser als Injektionswasser für die Injektionsbrunnen zu nutzen, scheitert in vielen Fällen ebenfalls an dem Restölgehalt des Wassers. Die Ölpartikel können bei Injektion in das Ölfeld die Poren in der ölführenden Formation verblocken und so die Förderleistung des Ölfeldes erheblich reduzieren, im Extremfall bis zum praktisch vollkommenen Versiegen der Förderung. Selbst wenn möglich ist, das Lagerstättenwasser wieder in das Ölfeld zu verpressen, sind damit weitere Probleme verbunden. Denn für eine sichere Lagerung des verschmutzten Wassers müsste die Verpressung genau in dem ölführenden Leiter erfolgen, der mittels des Förderbrunnens erschlossen ist. Eine derartige genaue Zuführung ist aber kaum sicher zu gewährleisten. Daher besteht immer ein Risiko, das zugeführtes Lagerstättenwasser nicht im Ölfeld verbleibt, sondern in andere Gesteinsschichten verpresst wird und somit zu Verschmutzungen führen kann, im Extremfall auch im Grundwasserleiter.

Versuche zur Ultrafiltration von ölhaltigem Lagerstättenwasser wurden immer wieder durchgeführt. Hierbei trat aber das Problem auf, dass die genutzten Membranen durch die Ölpartikel in kurzer Zeit ebenfalls irreversibel verblocken. Durch Verwendung von keramischen Membranen konnte zwar eine Rückspülfähigkeit erreicht werden, so dass die Membranen über längere Zeit genutzt werden können. Allerdings ist die Standzeit dieser speziellen keramischen Membranen zwischen den Spülvorgängen sehr kurz, und die Kosten für die Membranen sind sehr hoch. Daher kommen Verfahren mit diesen Membranen nur in wenigen speziellen Fällen mit einem relativ geringen Lagerstättenwasservolumen in Frage.

Es besteht daher die Aufgabe, eine Vorrichtung und ein Verfahren zur Verfügung zu stellen, mit dem der Restölgehalt des Wassers erheblich unter die derzeit machbaren Werte gesenkt werden kann, um z.B. eine weitere Verwendung des Lagerstättenwassers beispielsweise als Injektionswasser oder zur Herstellung von Prozessdampf zu ermöglichen. Die Erfindung soll lange Laufzeiten bei geringen Wartungspausen ermöglichen und gleichzeitig mit geringen Kosten durchgeführt werden können. Außerdem soll so auch ein verbessertes Verfahren zur Erzeugung von gereinigtem für die Förderung und/oder Raffinerierung von Erdöl sowie zur Förderung und/oder Raffinerierung von Erdöl angegeben werden.

Die Lösung der erstgenannten Aufgabe gelingt mit einem Verfahren nach Anspruch 1 und einer Vorrichtung nach Anspruch 13. Weitere vorteilhafte Ausführungsformen ergeben sich aus den Unteransprüchen.

Bei einem Verfahren zur Reinigung eines Gemisches von mit Öl verschmutztem Wasser wird das Gemisch einem Behälter zugeführt wird, der eine Ultrafiltrationseinheit mit einer Membran aufweist. Während der Reinigung wird dem Gemisch auf einem Strömungsweg zur Membran hin ein Schutzmaterial zugegeben, wobei sich das Schutzmaterial an der Membran als Film anlegt und so freies Öl im Gemisch von der Membran fernhält. Das Gemisch wird dann bei Durchtritt durch die Membran in Klarwasser gereinigt. Das Klarwasser wird stromabwärts der Membran aus der Ultrafiltrationseinheit abgeführt wird. Durch den Abzug von Klarwasser wird das im Behälter verbleibende Gemisch im Gehalt an Öl aufkonzentriert. Dieses Gemisch wird aus dem Behälter abgeführt.

Durch die Erfindung wird also während der Reinigung des Öl-Wasser-Gemisches die Membran mit einem Film nach Art einer Sekundärmembran in Form des Schutzmaterials beschichtet. Dabei handelt es sich um einen im Betrieb aufgebrachten Film, der nicht dauerhaft an der Membran anhaftet, sondern erneuerbar bzw. rückspülbar ist. Das bisherige Problem, dass die Membran in kürzester Zeit mit freien Ölpartikeln verstopft, ist vermieden, da die Ölpartikel durch das Schutzmaterial ferngehalten werden.

Das Schutzmaterial kann der Membran z.B. kontinuierlich und/oder in Zeitabschnitten und/oder in zeitlichen Intervallen zugeführt werden. Die Zugabe des Schutzmaterials erfolgt stromaufwärts im Zustromweg des Öl-WasserGemisches zur Memban. So trifft das Schutzmaterial dann auf die Membran und kann sich dort anlagern.

Das Öl-Wasser-Gemisch für das Verfahren kommt z.B. aus einer Vorreinigungsstufe, in der der ursprüngliche Ölgehalt im Wasser bereits reduzieri wurde, z.B. einem Gravitations-Phasentrenner oder einem anderen physikalisch arbeitenden Phasentrenner.

Gemäß der Erfindung wird also das Öl-Wasser-Gemisch einer Ultrafiltration zugeführt, wobei zur Unterstützung der Ultrafiltration dem Gemisch vor der Zuführung zur Ultrafiltration ein Schutzmaterial zudosiert wird, das direkt oder nach chemischer Reaktion mit dem Wasser aus dem Gemisch, als Film auf der Membran freies Öl von dieser fernhält.

Als Membran für die Ultrafiltrationsstufe können Hohlfasermembranen genutzt werden, die kostengünstig herzustellen sind und bei geringem Platzbedarf eine große Membranfläche zur Verfügung stellen. Diese Membranen sind so ausgebildet, dass bei anströmendem Wasser nur die Wassermoleküle durch die Membranporen hindurchtreten können, die größeren Kohlenwasserstoffe, aus denen das Öl besteht, aber zurückgehalten werden. Die Membran kann beispielsweise aus Polymeren bestehen oder diese enthalten.

Aus der Ultrafiltrationsstufe kann dann das Klarwasser entnommen werden. Dieses Klarwasser weist lediglich einen Anteil von 2-4 mg gelöster Kohlenwasserstoffe pro Liter auf. Feststoffe, freies oder emulgiertes Öl werden vollständig abgeschieden. Damit ist das Klarwasser rein genug, um z.B. als Injektionswasser für Injektionsbrunnen bei der Erdölförderung genutzt zu werden, ohne dass die Gefahr von Verblockungen der Porenräume des Ölfeldes besteht. Darüber hinaus ist das aus der Ultrafiltration entnommene Klarwasser auch entkeimt. Dies hat eine hohe Bedeutung für die Eignung als Injektionswasser, da Keime das im Ölfeld gespeicherte Rohöl zersetzen und somit das Ölfeld zerstören könnten. Auch wenn keine Nutzung als Injektionswasser durchgeführt wird, wird die weitere Verarbeitung, beispielsweise in einer Kläranlage, durch den erheblich verringerten Restölgehalt vereinfacht und kann kostengünstiger durchgeführt werden. Nach einer Weiterbehandlung zur Entsalzung, beispielsweise durch Umkehrosmose, kann das Klarwasser auch für weitere Zwecke, wie beispielsweise als Kesselspeisewasser in der Erdölverarbeitung, genutzt werden.

Da der Ultrafiltrationsstufe Klarwasser entnommen wird, wird in der verbleibenden Wasserphase das Restöl wieder aufkonzentriert. Diese Wasserphase mit aufkonzentriertem Restölgehalt wird z.B. erneut dem Verfahren zugeführt. Das aufkonzentrierte Gemisch kann aber auch wieder einer Vorreinigungsstufe zugeführt werden, die Wasser mit höherem Ölgehalt noch wirkungsvoll trennen kann.

Im Behälter kann insbesondere eine Strömung erzeugt werden, mittels derer das Öl-Wasser-Gemisch mehrfach an der Membran vorbeigeführt wird. Dies erhöht die Filterleistung weiter.

In einer bevorzugten Ausführungsform wird dem Gemisch ein Zusatzmittel zugegeben, das das Schutzmaterial enthält. Das Schutzmaterial wird also in Reinform oder als Teil eines Zugabemittels direkt dem Öl-Wasser-Gemisch zugeführt und lagert sich in unveränderter Form an der Membran an.

In einer alternativen Ausführungsform wird dagegen dem Gemisch ein Zusatzmittel zugegeben, wobei sich das Schutzmaterial erst durch eine Reaktion des Zusatzmittels mit dem Gemisch bildet. Die Reaktion kann hierbei chemischer oder auch physikalischer Natur - z.B. Agglomeration o.ä. - sein. Bei dieser Variante der Erfindung wird dann insbesondere die Transportzeit des Zusatzmittels von dessen Zugabe zum Öl-Wasser-Gemisch bis zu Auftreffen bzw. Anhaften an der Membran geeignet gewählt, damit die Reaktion in gewünschtem Maße stattfindet. Die Wahl der Transportzeit geschieht z.B. durch die Wahl des Zugabeortes und/oder die Wahl der Strömungsgeschwindigkeit des Öl-WasserGemisches.

In einer bevorzugten Variante wird als Zusatzmittel ein mit dem Wasser zusammenwirkendes Fällungsmittel verwendet. Die prinzipielle Reaktion ist hier die Erzeugung eines Fällungsmittelproduktes im Wasser, eine tatsächliche Fällung im klassischen Sinne tritt jedoch nicht ein: Die Transportzeit des Zusatzmittelts zur Membran wird so gering, insbesondere im Sekundenbereich bzw. im Bereich von Sekundenbruchteilen, gewählt, dass die Reaktionszeit nicht zur herkömmlichen Ausflockung ausreicht. Es entstehen nur sehr kleine Flocken im µm-Bereich, die zu klein sind, um ein Aufschwimmen oder Absinken gefällten Öls zu ermöglichen. Die Flocken werden nur in Ihrer Eigenschaft als Schutzmaterial genutzt, das sich an der Membran, jedoch nicht an die Öltröpfchen anlagert und auch nicht mit dem Öl reagiert.

Bevorzugt wird das Zusatzmittel daher in einer Konzentration zugegeben, die zu einer Reaktion mit dem Öl aufgrund von chemischen oder physikalischen Reaktionen nicht ausreicht. Mit anderen Worten liegt die durch Reaktion separierbare Ölmenge um Größenordnungen unter der membrangefilterten Ölmenge. Beispielsweise wird Eisenchlorid im Bereich weniger mg/l zugegeben. Diese Konzentration reicht nicht zur Emulsionserzeugung aus, kein signifikanter Anteil an Öl wird emulgiert oder ausgeflockt, der signifikante Anteil an Öl wird stattdessen an der erzeugten Sekundärmembran gefiltert und liegt um Größenordnungen über dem mit der zugesetzten Chemikalie reagierenden Anteil des Öls. Selbst Anteile des Zusatzmittels, die lange im Öl-Wasser-Gemisch bleiben, weil sie sich z.B. nicht an der Membran anlagern, bilden keine bzw. nur ganz geringe Reaktionen mit dem Öl, die das Filterergebnis nicht signifikant beeinflussen.

In einer bevorzugten Variante werden als Schutzmaterial hydrophile Kleinstpartikel einer vorgebbaren Maximalgröße, die sich im µm-Bereich bewegen, benutzt. Mit anderen Worten werden also Kleinstflocken bzw. Nanoflocken benutzt. Die Hydrophilität ist so gewählt, dass sich an dem aus dem Schutzmaterial gebildeten Film im wesentlichen nur Wasser, nicht aber freies Öl anlagert. So gelangt Wasser durch die Membran, Öl wird von ihr ferngehalten.

In einer weiteren Variante des Verfahrens wird das Gemisch dem Behälter ausgehend von einem Vorratsspeicher zugeführt. Das aus dem Behälter abgeführte Gemisch wird dann in den Vorratsspeicher zurückgeführt. So entsteht ein Kreislaufsystem, bei dem das aufkonzentrierte Öl-Wasser-Gemisch einem erneuten Verfahrensdurchgang unterzogen wird. Insbesondere kann hier, wie oben erwähnt, im Kreislauf, z.B. im Bereich des Vorratsspeichers, eine Vorreinigungsstufe betrieben werden. So kann z.B. der Vorratsspeicher als Senke für eine Gravitationstrennung ausgebildet sein.

Wie erwähnt, kann bevorzugt das Schutzmaterial durch eine Rückspülung der Membran entgegen der Strömungsrichtung, in der im regulären Filterbetrieb Wasser die Membran durchdringt, entfernt werden. Dies geschieht in Intervallen bzw. nach Bedarf. So wird die Membran von bisherigem Schutzmaterial befreit und neues Schutzmaterial kann sich anlagern.

Hinsichtlich eines Verfahrens zur Erzeugung von gereinigtem Prozesswasser für die Förderung und/oder Raffinerierung von Erdöl wird die Aufgabe der Erfindung gelöst durch ein Verfahren nach Anspruch 10. Das gereinigte Prozesswasser wird als Klarwasser mit einem o.g. Verfahren aus mit Öl verschmutztem Wasser erzeugt. Als Öl-Wasser-Gemisch wird verschmutztes Prozesswasser der Erdölförderung bzw. -raffinerierung verwendet. Derartiges Prozesswasser ist z.b. sogenanntes "produced water" und/oder "desalter water". "Sauberes" Prozesswasser wird also aus verschmutztem Prozesswasser erzeugt. Die Zufuhr von Frischwasser bei der Förderung und/oder Raffinerierung von Erdöl wird daher vermieden bzw. drastisch reduziert.

In einer bevorzugten Ausführungsform wird das gereinigte Prozesswasser als Kesselspeisewasser und/oder als Entsalzungswasser und/oder als sonstiges recyceltes, also nach obigem Verfahren wiederaufbereitetes Wasser verwendet, also diesen Prozessen - u.U. wieder - zugeführt.

Bei der Förderung von Erdöl kann das gereinigte Prozesswasser besonders vorteilhaft zur Reinjektion in ein Ölfeld verwendet werden.

Hinsichtlich der Vorrichtung zur Reinigung eines Gemisches von mit Öl verschmutztem Wasser zu Klarwasser wird die Aufgabe der Erfindung gelöst durch eine solche gemäß Anspruch 13. Die Vorrichtung enthält einen Behälter, der eine Ultrafiltrationseinheit mit einer Membran aufweist, eine in den Behälter mündende Zuführungsleitung für das Gemisch und eine Zugabevorrichtung für ein Schutzmaterial. Die Zugabevorrichtung mündet in einen Strömungsweg des Gemisches zur Membran hin. Die Vorrichtung enthält auch eine von der Ultrafiltrationseinheit stromabwärts der Membran wegführende Klarwasserleitung. Durch diese wird Klarwasser abgeführt, das bei Durchtritt durch die Membran gereinigt wurde. Eine vom Behälter wegführende Ableitung für im Ölgehalt aufkonzentriertes Gemisch ist ebenfalls Teil der Vorrichtung.

Vorteile der Vorrichtung wurden bereits sinngemäß anhand des Verfahrens erläutert.

In einer bevorzugten Ausführungsform mündet die Zugabevorrichtung in die Zuführungsleitung. Die Zugabe kann so besonders einfach erfolgen, da nur die Zuleitung mit einem entsprechenden Anschluss versehen werden muss.

Die Vorrichtung kann bevorzugt einen Vorratsspeicher, z.B. eine Senke zur Aufnahme von Lagerstättenwasser aufweisen. Dieses Lagerstättenwasser stammt in der Regel aus einem Phasentrenner, in dem bereits eine Trennung eines Erdöl-/Wassergemisches aus der Erdölförderung stattgefunden hat und weist in der Regel einen Ölgehalt von 500 bis 1000 mg/l auf. Es sind aber auch hiervon abweichende Ölgehalte möglich, die sich von 200 bis 5000 mg/l erstrecken können.

Als Senke kommen verschiedenste Vorrichtungen in Frage. Ganz allgemein soll in der Senke bereits eine Trennung des Lagerstättenwassers in zurückgewonnenes freies Öl und eine Wasserphase mit geringerem Ölgehalt erfolgen.

Im Rahmen der Erfindung bietet sich die Möglichkeit, als Senke beispielsweise ein Klärbecken, einen Teich oder einen Tank einzusetzen, in dem eine weitere Gravitationsseparation durchgeführt wird. Daneben können beispielsweise Lamellenklärer, Schrägrohrklärer, Schnellklärer oder Koaleszenzabscheider zum Einsatz kommen. Besonders vorteilhaft kann als Senke eine Druck-Entspannungs Flotation genutzt werden. Hierbei werden Luft- oder Gasblasen in das Lagerstättenwasser eingebracht, die zu einer Trennung von Öl und Wasser führen. In der Senke bilden sich dann drei Phasen aus, die ölhaltige Phase an der Oberfläche, die abgeführt werden kann, eine wasserhaltige Phase mit einem reduzierten ostölgehalt und am Boden der Senke eventuell mitgeführt Feststoffe, die als Schlamm abgelagert werden und in regelmäßigen Abständen entfernt werden. Die wasserhaltige Phase mit reduziertem Restölgehalt kann dann aus der Senke entnommen werden und der nachfolgenden Ultrafiltration zugeführt werden.

Weitere Weiterbildungen der Vorrichtung wurden bereits sinngemäß oben zusammen mit dem Verfahren erläutert.

Weitere Merkmale, Merkmalskombinationen, Vorteile und Eigenschaften der Erfindung werden dargestellt anhand der nachfolgenden Beschreibung eines bevorzugten Ausführungsbeispiels und in den Zeichnungen. Diese zeigen in:
- Fig. 1: eine schematische Darstellung der Ölförderung in einem Ölfeld und der Wasserverarbeitung bei der Ölförderung,
- Fig. 2: eine schematische Darstellung einer erfindungsgemäßen Wasseraufbereitungsanlage,
- Fig. 3: die Konzentrationseinheit aus Fig. 2 im Detail.

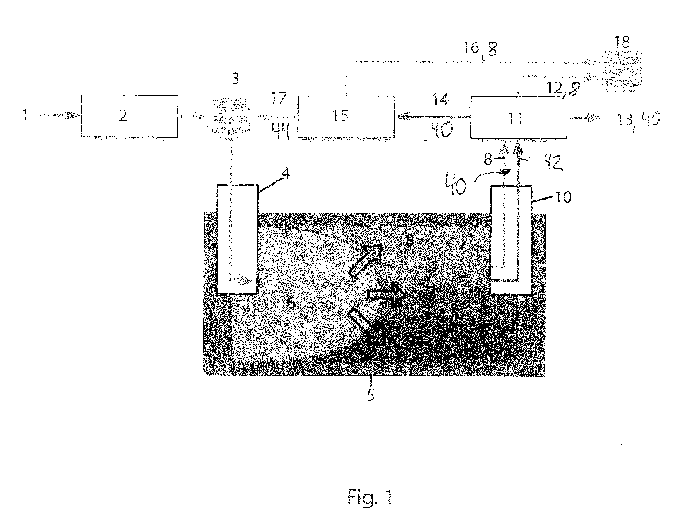

Fig. 1 zeigt eine externe Wasserquelle 1 (beispielsweise entweder ein unterirdischer Aquifer oder Meerwasser), aus der Wasser als Injektionswasser entnommen und nach einer Aufbereitung in einer Aufbereitungsanlage 2 (beispielsweise Meerwasserentsalzung) über einen Injektionsbrunnen 4 in ein Ölfeld 5 gepumpt wird. Zur Abdeckung von Schwankungen kann das Injektionswasser vorher in einem Tank 3 zwischengespeichert werden. Durch das eingepresste Injektionswasser bildet sich im Ölfeld 5 eine Wasserbank 6 aus, die eine Ölbank 7 in Richtung eines Förderbrunnens 10 drückt. Die Ölbank 7 setzt sich dabei aus einem Anteil Öl 8, hier Erdöl, und einem Anteil Formationswasser 9 zusammen. Das Öl 8 befindet sich dabei aufgrund seiner Dichte mehr im höher gelegenen Teil der Ölbank 7, während das Formationswasser 9 hauptsächlich in deren tiefer gelegenen Bereichen gespeichert ist.

Aus dem Förderbrunnen 10 tritt nun ein Gemisch 40 von Öl 8 und Wasser 42 (Prozesswasser, hier Formationswasser 9 und/oder Injektionswasser) aus. Dieses wird in einer ersten Behandlungsstufe 11 einer Trennung unterzogen. Diese findet in der Regel in Phasentrennern statt, es handelt sich also um ein Gravitations-Separationsverfahren. Abgetrenntes Öl 8 wird aus der Behandlungsstufe 11 über eine Leitung 12 in einem Tank 18 gespeichert, bis es zur Weiterverarbeitung abtransportiert wird. Zurück bleibt ein restliches Gemisch 40 aus noch mit Öl 8 verschmutztem Wasser 42. Bei Anlagen nach dem Stand der Technik wird das Gemisch 40 zur Verpressung in einem Aquifer, in Entsorgungsteiche abgegepumpt oder einer anderen externen Entsorgung wie z.B. industrielle oder kommunale Kläranlagen zugeführt (in der Figur durch den Pfeil 13 symbolisiert).

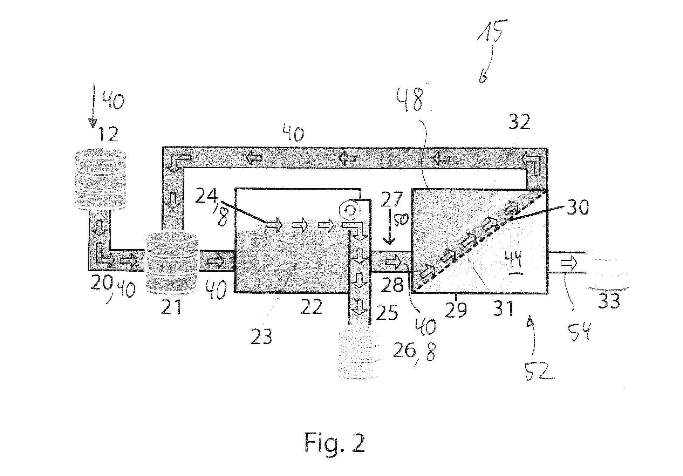

Hier setzt nun die vorliegende Erfindung an. Das Gemisch 40 wird anstatt entlang des Pfeils 13 über eine Leitung 14 zu einer Wasseraufbereitungsanlage 15 geleitet. Dort erfolgt eine erfindungsgemäße Aufbereitung bzw. Trennung von Öl 8 und Wasser 42 (siehe Fig. 2). Das so zusätzlich gewonnene Öl 8 kann über die Leitung 16 in den Tank 18 überführt werden und erhöht so die Gesamtausbeute der Ölförderung. Gereinigtes Klarwasser 44 kann über eine Leitung 17 in den Injektionswassertank 3 überführt werden und zur Injektion in das Ölfeld 5 genutzt werden. Damit entfällt die Notwendigkeit, unter großem Aufwand Injektionswasser aus der Wasserquelle 1 zu fördern und aufzubereiten, und gleichzeitig wird eine Umweltbelastung durch verschmutztes Wasser in Form des Gemischs 40 aus dem Ölförderprozess vermieden.

Fig. 2 zeigt die Wasseraufbereitungsanlage 15 im Detail. Das eintretende Gemisch 40 gelangt zunächst in einen Gravitations-Separationstank 12. Von dort wird es über eine Leitung 20 in einen Vorratsspeicher 21 in Form eines Zuführungstanks für die Ölrückgewinnung geleitet. Aus diesem Vorratsspeicher 21 wird das Gemisch 40 einer Senke 22 zugeführt. In der gezeigten Ausführungsform kommt in der Senke 22 eine Druck-Entspannungs-Flotation (Dissolved Air Flotation, DAF) mit Luftblasen zum Einsatz. Es ist alternativ ebenso möglich, eine Gasflotation oder andere Separationsverfahren wie beispielsweise Koaleszenzabscheider auf das Gemisch 40 in der Senke 22 anzuwenden. Bei der Druck-Entspannungs-Flotation werden feinverteilte Gasblasen in das Gemisch 40 eingeblasen, die in Richtung der Pfeile 23 nach oben steigen und dabei aufgrund der verschiedenen Oberflächenbenetzung die Partikel des Öls 8 "mitnehmen", so dass sich auf der Oberfläche eine Ölphase 24 aus separiertem Öl 8 bildet. Diese Ölphase 24 kann abgeschöpft oder anderweitig abgezogen bzw abgeführt werden und wird über eine Leitung 25 in einen Tank 26 für das rückgewonnene Öl 8 abgeleitet. Von dort kann eine Weiterleitung zum Haupt-Öltank in Form des Tanks 18 aus Fig. 1 erfolgen.

Als Senke 22 kann auch bei entsprechender Ausstattung der Förderanlagen ein bereits vorhandener Abscheider oder Phasentrenner genutzt werden, wenn mit diesem bereits eine ausreichende Reduktion des Ölgehalts im Gemisch 40 erzielt werden kann. Dies ist vor allem der Fall bei Förderanlagen, die bereits mit einem Mehrphasenabscheider oder einer Flotations-Separation ausgerüstet sind.

Das im Ölgehalt reduzierte Gemisch 40 wird über eine Zuführungsleitung 28 abgeführt und einem Behälter 48 einer Konzentrationseinheit 29 oder Schönungseinheit zugeführt. In die Zuführungsleitung 28 mündet eine Zugabevorrichtung 27 für ein Schutzmaterial 50. Hierdurch wird dem Gemisch 40 das Schutzmaterial 50 zugesetzt. Nach der Zudosierung des Schutzmaterials 50 gelangt das Gemisch 40 in die Konzentrationseinheit 29. Diese Konzentrations 29 weist im bzw. am Behälter 48 eine Ultrafiltrationseineit 52 auf, deren Membran 30, hier eine Ultrafiltrationsmembran, mit dem Gemisch 40 in Verbindung steht. Diese Membran 30 besteht aus einer Polymermembran und ist in der Lage, Partikel ab einer vorgebbaren Größe, im Beispiel mit einer Größe von mehr als 0,02 µm, zurückzuhalten. Damit werden alle freien Partikel wie Öl 8 oder Ölemulsionströpfchen, aber auch Feststoffe und Keime im Gemisch 40 zuverlässig zurückgehalten.

Die Membran 30 wird im Beispiel im Cross-Flow-Betrieb, eingesetzt, d.h. das Gemisch 40 wird mit einer relativ hohen Geschwindigkeit an der Membran 30 entlanggeführt. Alternativ ist aber auch ein Dead-End Betrieb möglich. Um einen möglichst guten Wirkungsgrad der Filtration zu erreichen, ist es beim Cross-Flow-Betreib vorteilhaft, wenn mit einem Umwälzverfahren das Gemisch 40 mehrfach an der Membran 30 vorbeigeführt wird. Beim Entlangführen des Gemischs 40 an der Membran 30 treten Wassermoleküle durch die Membran 30 hindurch und werden anschließend abgeführt. So entsteht in der Ultrafiltrationseinheit 52 Klarwasser 44. Dieses Klarwasser 44 (Permeat) ist anschließend frei von freiem Öl 8, Feststoffen und Keimen und enthält lediglich geringe Reste von gelösten Kohlenwasserstoffen. Das Klarwasser 44 kann dann über eine Klarwasserleitung 54 in einen Klarwassertank 33 abgeführt werden. Das Klarwasser 44 kann dann z.B., wie im Zusammenhang mit Figur 1 erläutert, als Injektionswasser genutzt oder, gegebenenfalls nach weiterer Aufbereitung, zur Herstellung von Prozessdampf genutzt oder zur Entsorgung gegeben werden. Das im Behälter 48 verbleibende Gemisch 40 wird durch den Abfluss des Klarwassers 44 im Ölgehalt aufkonzentriert. Z.B. beim Erreichen einer gewünschten oder vorgegebenen Konzentration an Öl 8 im Gemisch 40 wird das aufkonzentrierte Gemisch 40 über eine Ableitung 32 aus dem Behälter 48 zurück in den Vorratsspeicher 21 geleitet und von dort wieder der Senke 22 zugeführt, wo das aufkonzentrierte Öl 8 rückgewonnen werden kann.

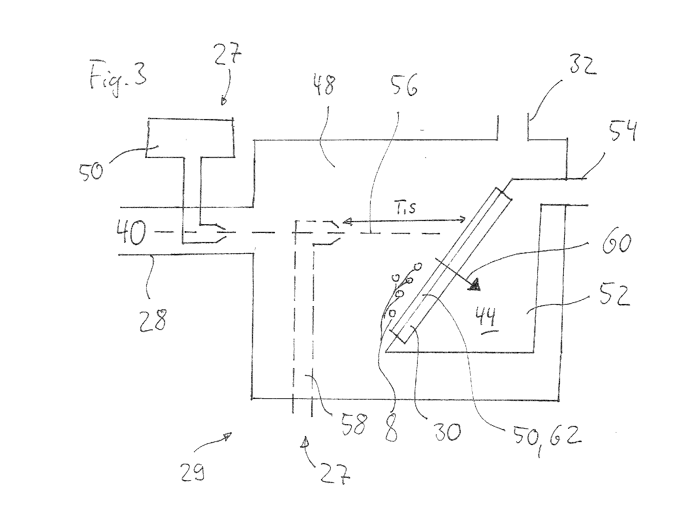

Fig. 3 zeigt die Konzentrationseinheit 29 im Detail. Das von der Zugabevorrichtung 27 dem Gemisch 40 zudosierte Schutzmaterial 50 gelangt entlang eines Strömungsweges 56 des Gemischs 40 im Behälter 48 zur Membran 30. Das Schutzmaterial 50 legt sich dabei in Form eines Films 62 an der Membran 30 an. Der Film 62 bzw. das Schutzmaterial 50 verhindert, dass sich freies Öl 8, welches weiterhin im Gemisch 40 vorhanden ist, an der Membran 30 anlegt und diese verstopft. Dennoch lässt der Film 62 Klarwasser 44 entlang der Strömungsrichtung 60 durch die Membran 30 passieren. Ein Verstopfen, Verkleben usw. der Membran 30 durch freies Öl 8 wird so verhindert. So kann stets weiter Klarwasser 44 aus dem Gemisch 40 im Behälter 48 abgezogen werden, wodurch das Gemisch 40 im Gehalt an Öl 8 aufkonzentriert wird.

Wenn z.B. die Filtrationsleistung der Membran 30 nachlässt oder in regelmäßigen Zeitintervallen kann die Membran 30 entgegen der Strömungsrichtung 60 beispielsweise mit Klarwasser 44 rückgespült werden. Hierbei wird der Film 62 aus Schutzmaterial 50 von der Membran 30 gelöst und die Membran 30 kann mit einem neuen Film 62 aus Schutzmaterial 50 belegt werden, um wieder ihre volle Filterleistungsfähigkeit zu erhalten.

Fig. 3 zeigt in einer alternativen Ausführungsform gestrichelt eine Zugabevorrichtung 27, die nicht in die Zuführungsleitung 28, sondern direkt in den Behälter 48 mündet. Diese gibt dem Gemisch 40 im Strömungsweg 56 auch nicht direkt das Schutzmaterial 50, sondern ein Zusatzmittel 58 bei. Im Zusatzmittel 58 ist das Schutzmaterial 50 enthalten und lagert sich so wie oben beschrieben als Film 62 an der Membran 30 an. In einer alternativen Ausführungsform enthält das Zusatzmittel 58 das Schutzmaterial 50 nicht direkt bzw. in fertiger Form. Erst bei Kontakt mit dem Gemisch 40 reagiert das Zusatzmittel 58 mit dem Gemisch 40 und bildet so das Schutzmaterial 50 aus, welches sich schlussendlich dann wieder als Film 62 an der Membran 30 anlegt. in diesem Fall wird das Schutzmaterial 50 dem Gemisch 40 mit anderen Worten indirekt beigegeben.

Fig. 3 zeigt also eine erfindungsgemäße Vorrichtung 64, umfassend den Behälter (48), der eine Ultrafiltrationseinheit (52) mit einer Membran (30) aufweist, die in den Behälter (48) mündende Zuführungsleitung (28) für das Gemisch (40), die Zugabevorrichtung (27) für das Schutzmaterial (50), die in den Strömungsweg (56) des Gemisches (40) zur Membran (30) hin mündet, die von der Ultrafiltrationseinheit (52) stromabwärts der Membran (30) wegführende Klarwasserleitung (54) für bei Durchtritt durch die Membran (30) gereinigtes Klarwasser (44), und die vom Behälter (48) wegführende Ableitung (32) für im Gehalt an Öl (8) aufkonzentriertes Gemisch (40).

Im Beispiel ist das Zusatzmittel 58 ein Flockungs- oder Fällungsmittel, das mit Wasser chemisch reagiert. Konkret wird im Beispiel als Zusatzmittel Eisen-III-chlorid in einer Konzentration zwischen 0,1 und 20 mg/l, alternativ zwischen 0,5 und 10 mg/l, alternativ und bevorzugt zwischen 1 und 5 mg/l, eingesetzt, es sind aber grundsätzlich auch andere Schutzmaterialien 50 bzw. Reaktionsmittel möglich. Entscheidend ist hjer, dass das Flockungs- oder Fällungsmittel nicht im herkömmlichen Sinne und in herkömmlicher Dosierung eingesetzt wird. Hier erfolgt keine klassische Fällung und es erfolgt keine chemische oder physikalische Reaktion mit dem Öl. Die Anlage ist derart dimensioniert, dass eine Transportzeit T nicht ausreicht, dass das Flockungs- oder Fällungsmittel ausreichend große, eine klassische Fällung ermöglichende Partikel ausbildet. Die Transportzeit T ist diejenige Zeit, die das Gemisch benötigt, um vom Zudosierungsort des Zusatzmittels 58 zur Membran 30 zu gelangen, also eine Strecke s zurückzulegen. Die Dimensionierung der Transportzeit T erfolgt konkret, indem bei gegebener Strömungsgeschwindigkeit des Gemischs 40 entlang des Strömungsweges 56 die die Zugabevorrichtung 27 im geeigneten Abstand s zur Membran 30 platziert wird. In der Transportzeit T können nur mikroskopisch kleine Partikel einer vorgebbaren Maximalgröße entstehen, die das Schutzmaterial 50 bilden und sich an der Membran 30 als Film 62 anlagern.

### Bezugszeichenliste

- 1: Wasserquelle
- 2: Aufbereitungsanlage
- 3: Injektionswassertank
- 4: Injektionsbrunnen
- 5: Ölfeld
- 6: Wasserbank
- 7: Ölbank
- 8: Öl
- 9: Formationswasser
- 10: Förderbrunnen
- 11: Sehandlungsstufe
- 12: Leitung, Gravitations-Separationstank
- 13: Pfeil
- 14: Leitung
- 15: Wasseraufbereitungsanlage
- 16: Leitung
- 17: Leitung
- 18: Tank
- 20: Leitung
- 21: Vorratsspeicher
- 22: Senke
- 23: Pfeil
- 24: Ölphase
- 25: Leitung
- 26: Tank
- 27: Zugabevorrichtung
- 28: Zuführungsleitung
- 29: Konzentrationseinheit
- 30: Membran
- 33: Klarwassertank
- 31: Lagerstättenwasser
- 32: Ableitung
- 40: Gemisch
- 42: Wasser
- 44: Klarwasser
- 48: Behälter
- 50: Schutzmaterial
- 52: Ultrafiltrationseinheit
- 54: Klarwasserleitung
- 56: Strömungsweg
- 58: Zusatzmittel
- 60: Strömungsrichtung
- 62: Film
- 64: Vorrichtung

- T: Transportzeit
- s: Strecke

## Patentansprüche

1. Verfahren zur Reinigung eines Gemisches (40) von mit Öl (8) verschmutztem Wasser (42),
**dadurch gekennzeichnet, dass**
- das Gemisch (40) einem Behälter (48) zugeführt wird, der eine Ultrafiltrationseinheit (52) mit einer Membran (30) aufweist,
- während der Reinigung dem Gemisch (40) auf einem Strömungsweg (56) zur Membran (30) hin ein Schutzmaterial (50) zugegeben wird,
- wobei sich das Schutzmaterial (50) als Film (62) an der Membran (30) anlegt und so freies Öl (8) im Gemisch (40) von der Membran (30) fernhält,
- das Gemisch (40) bei Durchtritt durch die Membran (30) in Klarwasser (44) gereinigt wird,
- das Klarwasser (44) stromabwärts der Membran (30) aus der Ultrafiltrationseinheit (52) abgeführt wird,
- durch Abzug von Klarwasser (44) im Gehalt an Öl (8) aufkonzentriertes Gemisch (40) aus dem Behälter (48) abgeführt wird.

2. Verfahren nach Anspruch 1, bei dem dem Gemisch (40) ein Zusatzmittel (58) zugegeben, das das Schutzmaterial (40) enthält.

3. Verfahren nach Anspruch 1, bei dem dem Gemisch (40) ein Zusatzmittel (58) zugegeben wird und sich das Schutzmaterial (50) durch eine Reaktion des Zusatzmittels(58) mit dem Gemisch (40) bildet.

4. Verfahren nach Anspruch 3, bei dem als Zusatzmittel (58) ein mit dem Wasser (42) zusammenwirkendes Fällungsmittel verwendet wird.

5. Verfahren nach Anspruch 3 oder 4, bei dem das Zusatzmittel (58) in einer Konzentration zugegeben wird, die zu einer Ölseparation aufgrund von Fällungsprozessen oder chemischen Reaktionen nicht ausreicht.

6. Verfahren nach Anspruch 5, bei dem eine Konzentration zwischen 0,1 mg/l und 20 mg/l, vorzugsweise zwischen 0,5 mg/l und 10 mg/l, besonders vorzugsweise zwischen 1mg/l und 5 mg/l gowähft wird.

7. Verfahren nach einem der vorhergehenden Ansprüche, bei dem als Schutzmaterial (50) hydrophile Kleinstpartikel einer vorgebbaren Maximalgröße benutzt werden.

8. Verfahren nach einem der vorhergehenden Ansprüche, bei dem das Gemisch (40) dem Behälter (48) ausgehend von einem Vorratsspeicher (21) zugeführt wird, und das aus dem Behälter (48) abgeführtes Gemisch (40) in den Vorratsspeicher (21) zurückgeführt wird.

9. Verfahren nach einem der vorhergehenden Ansprüche, bei dem das Schutzmaterial (50) durch eine Rückspülung der Membran (30) entgegen der Strömungsrichtung (60) im Betrieb entfernt wird.

10. Verfahren zur Erzeugung von gereinigtem Prozesswasser für die Förderung und/oder Raffinerierung von Erdöl (8), bei dem das gereinigte Prozesswasser als Klarwasser (44) mit einem Verfahren nach einem der Ansprüche 1 bis 9 aus mit Erdöl (8) verschmutztem Prozesswasser (42) als Gemisch (40) erzeugt wird.

11. Verfahren zur Förderung und/oder Raffinerierung von Erdöl (8), bei dem gereinigtes Prozesswasser (42), das nach einem Verfahren gemäß Anspruch 10 erzeugt wird, als Kesselspeisewasser, Entsalzungswasser und/oder sonstiges recyceltes Wasser verwendet wird.

12. Verfahren zur Förderung von Erdöl (8), bei dem gereinigtes Prozesswasser (42), das nach einem Verfahren gemäß Anspruch 10 als Klarwasser (44) erzeugt wird, zur Reinjektion in ein Ölfeld (5) verwendet wird.

13. Vorrichtung (64) zur Reinigung eines Gemisches (40) von mit Öl (8) verschmutztem Wasser (42) zu Klarwasser (44),
**gekennzeichnet durch**
- einen Behälter (48), der eine Ultrafiltrationseinheit (52) mit einer Membran (30) aufweist,
- eine in den Behälter (48) mündende Zuführungsleitung (28) für das Gemisch (40),
- eine Zugabevorrichtung (27) für ein Schutzmaterial (50), die in einen Strömungsweg (56) des Gemisches (40) zur Membran (30) hin mündet,
- eine von der Ultrafiltrationseinheit (52) stromabwärts der Membran (30) wegführende Klarwasserleitung (54) für bei Durchtritt **durch** die Membran (30) gereinigtes Klarwasser (44),
- eine vom Behälter (48) wegführende Ableitung (32) für im Gehalt an Öl (8) aufkonzentriertes Gemisch (40).

14. Vorrichtung nach Anspruch 13, bei der die Zugabevorrichtung (27) in die Zuführungsleitung (28) mündet.
